# FASCICULE DE BREVET EUROPEEN

(11) **EP 0 542 601 B1**
(45) Date de publication et mention de la délivrance du brevet: **21.08.1996**
(21) Numéro de dépôt: 92402973.9
(22) Date de dépôt: 03.11.1992
(51) Int. Cl.: B60P 1/48

(54) **Système d'accrochage pour dispositif de manutention de bennes trapézoidales**
Anhakungsvorrichtung für Förderungsvorrichtung von trapezförmigen Behältern
Hooking system for handling-device for trapezoidal containers

(30) Priorité: 15.11.1991 FR 9114107
(43) Date de publication de la demande: 19.05.1993
(73) Titulaire: MARREL, F-42160 Andrézieux-Bouthéon (FR)
(72) Inventeur: Chalavon, Jacques, F-42340 Veauche (FR); Chiron, Alain, F-42610 Saint Romain le Puy (FR)
(74) Mandataire: Rinuy, Santarelli

(56) Documents cités:
- EP-A- 0 107 892
- EP-A- 0 404 620
- DE-A- 3 426 310
- DE-A- 3 544 843
- PATENT ABSTRACTS OF JAPAN vol. 012, no. 419 (M-760)8 Novembre 1988 & JP-A-63 154 442 (KYOKUTO KAIHATSU KOGYO) 27 Juin 1988

## Description

L'invention a trait à la manutention des bennes de forme trapézoïdale qui sont munies en partie haute, sur chaque face latérale, de deux pattes en saillie pour accrocher le bout d'une chaîne, et en partie basse sur chaque face transversale, de un ou deux axe(s) de basculement orienté(s) horizontalement et parallèlement à la face transversale.

On sait que ces bennes sont destinées à être manipulées par un dispositif, généralement monté sur un véhicule, qui comporte de chaque côté un bras articulé à sa base autour d'un axe horizontal tandis qu'à son sommet sont fixées à un point commun deux chaînes de même longueur dont l'extrémité libre de chacune est destinée à être accrochée sur l'une des pattes en saillie sur la partie haute de la face latérale correspondante de la benne. Pour charger ou décharger la benne, on fait pivoter simultanément les deux bras, les chaînes se tendent, la benne est soulevée et décrit un arc de cercle - centré sur l'axe commun de pivotement des bras - en restant horizontale, l'ensemble benne-chaînes pivotant sous l'effet de la gravité autour de l'axe passant par les deux points communs d'accrochage des chaînes. Pour permettre de vider le contenu de la benne derrière le véhicule, le dispositif de manutention comporte en outre un système d'accrochage avec un ou deux crochet(s) disposé(s) en arrière et à peu près au niveau où repose la benne lorsqu'elle est chargée sur le véhicule. Dans la position effacée, chaque crochet est abaissé de sorte qu'il est en dehors du trajet de la benne lorsque celle-ci est chargée ou déchargée, tandis qu'en position d'accrochage chaque crochet est relevé et disposé dans le trajet de l'axe de basculement qui lui correspond. Si les bras, accrochés par les chaînes à une benne chargée sur le véhicule, sont alors basculés en arrière, la benne décrit le même mouvement que précédemment jusqu'à ce que le ou les axe(s) de basculement situé(s) sur la partie basse de la face transversale arrière de la benne s'engage(nt) dans le(s) crochet(s), la benne ne restant alors plus horizontale mais basculant autour du ou des axe(s) de sorte qu'elle se vide derrière le véhicule. Au retour, lorsqu'on fait basculer les bras en avant, le mouvement est similaire, c'est-à-dire que la benne pivote autour de l'(des) axe(s) de préhension jusqu'à ce que celui-ci (ceux-ci) se dégage(nt) du (des) crochet(s), la fin du mouvement étant similaire au chargement.

L'invention vise un système d'accrochage qui puisse convenir aussi bien aux bennes à un axe de basculement disposé de façon centrale (norme allemande DIN 30720) qu'aux bennes à deux axes de basculement disposés latéralement (norme française NF R 17-106).

Elle propose à cet effet un système d'accrochage pour dispositif de manutention de bennes trapézoïdales, comportant au moins un crochet adapté à coopérer avec un axe de basculement d'une dite benne et des moyens de montage du crochet comportant un arbre monté à pivotement sur le dispositif de manutention ; caractérisé en ce que ledit arbre est adapté au montage de trois crochets : un crochet central adapté à coopérer avec des bennes du type comportant un axe de basculement central, et deux crochets latéraux adaptés à coopérer avec des bennes du type comportant deux axes de basculement latéraux, chaque crochet pouvant être libéré en rotation vis à vis de l'arbre.

Ainsi, en supposant que l'on ait monté les trois crochets sur l'arbre, il suffit de libérer le crochet central tout en laissant les crochets latéraux attelés en rotation, pour pouvoir utiliser le système avec une benne à deux axes de basculement, ou alors de libérer les deux crochets latéraux tout en gardant l'attelage du crochet central pour l'utilisation avec une benne à un axe de basculement : seul le ou les crochet(s) qui continue(nt) à être attelé(s) est (sont) opérationnel(s), on évite la configuration interdite où les trois crochets seraient opérationnels en même temps.

Le système selon l'invention offre l'avantage d'être particulièrement simple vis à vis des systèmes antérieurs qui comportaient deux arbres concentriques commandés indépendamment par deux vérins différents, l'un de ces arbres portant les deux crochets latéraux et l'autre arbre le crochet central.

Selon des caractéristiques préférées de l'invention, chaque crochet est bloqué vis à vis de l'arbre grâce à une goupille démontable.

La goupille est en effet un moyen particulièrement simple, commode et économique pour atteler ou libérer en rotation le crochet vis à vis de l'arbre.

Selon d'autres caractéristiques préférées de l'invention, ledit arbre est monté à pivotement grâce à au moins deux supports verticaux formant palier, il est bloqué axialement grâce à un moyen démontable coopérant avec au moins un dit support, et il comporte un levier de commande bloqué vis à vis de l'arbre grâce à un moyen démontable.

Avec ces caractéristiques, lorsqu'on libère tous les blocages, il est possible de démonter l'arbre en le faisant coulisser axialement. Par conséquent, si le véhicule est initialement prévu pour être utilisé avec des bennes à un axe de basculement central, on peut très bien monter uniquement le crochet central, et si par la suite le véhicule doit pouvoir travailler également avec des bennes à deux axes de basculement ou uniquement avec des bennes à deux axes de basculement, il est particulièrement aisé de rajouter les deux crochets latéraux, en gardant ou non le crochet central.

On voit que l'invention est particulièrement avantageuse par rapport aux systèmes antérieurs où le ou les crochet(s) étai(en)t toujours soudé(s) sur l'arbre, et où par conséquent il fallait reconstruire en grande partie le système d'accrochage quand on voulait passer d'un système à un crochet à un système à deux crochets ou inversement.

L'exposé de l'invention sera maintenant poursuivi par la description d'exemples de réalisation, donnée ci-après à titre illustratif et non limitatif, en référence aux dessins annexés. Sur ceux-ci :
- la figure 1 est une perspective partielle simplifiée d'un système conforme à l'invention, prise depuis l'arrière et la gauche d'un véhicule équipé d'un dispositif de manutention de bennes trapézoïdales, le système d'accrochage illustré comportant un crochet central et étant montré en position d'accrochage ;
- la figure 2 est une perspective partielle schématique de ce système dans la même position, prise depuis le côté droit du véhicule et en avant de la partie du système représenté ;
- la figure 3 est une vue de droite en coupe, correspondant à la figure 2 ;
- la figure 4 est une perspective similaire à la figure 2 mais montrant le crochet dans la position de verrouillage d'un axe de basculement de benne qu'il adopte après que la patte à bout recourbé ait été entraînée vers l'arrière par cet axe de basculement ;
- la figure 5 est une vue similaire à la figure 3, mais montrant le système en cours de basculement de la benne ;
- la figure 6 est une vue similaire à la figure 3, mais montrant le crochet dans une position basculée sur l'avant qu'il a adoptée après avoir été entraîné lors du retour de basculement au delà de la position d'accrochage par la benne qui ne s'est pas décrochée ;
- la figure 7 est une vue similaire à la figure 3, mais montrant le système avec le crochet en position effacée ;
- la figure 8 est une vue de derrière partielle du système, correspondant aux figures 2, 3 ou 4, la patte à bout recourbé du crochet et le ressort n'étant pas représentés ;
- la figure 9 est une vue similaire à la figure 8, dans une variante à deux crochets latéraux plutôt qu'un crochet central ; et
- la figure 10 est une vue similaire à la figure 9, dans une variante à trois crochets avec les deux crochets latéraux goupillés et le crochet central dégoupillé.

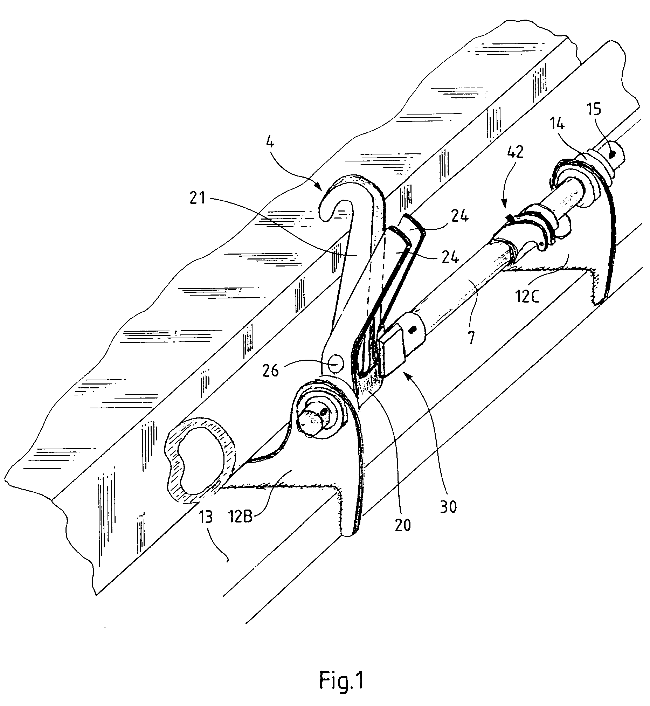

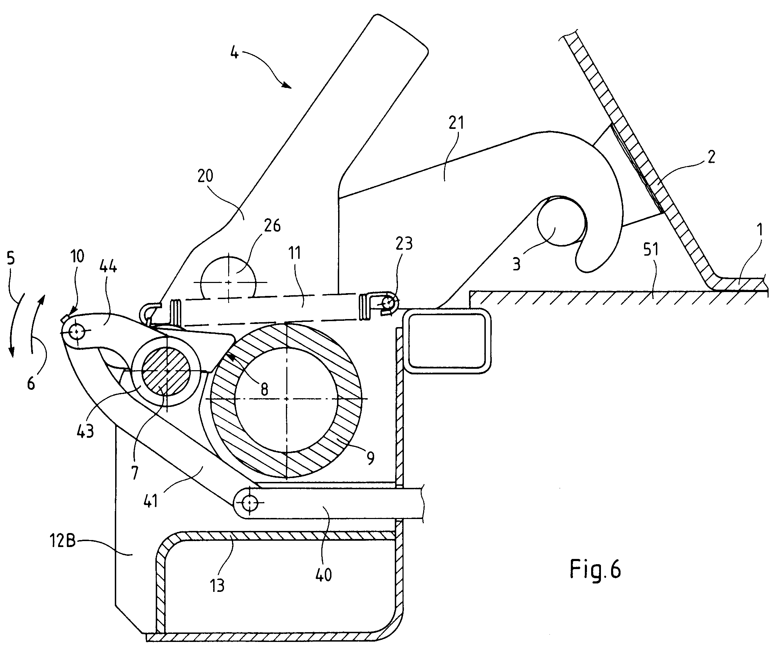

Le système d'accrochage illustré sur les figures 1 à 8 est prévu pour coopérer comme indiqué précédemment avec des bennes trapézoïdales 1 dont la partie basse du pan incliné transversal 2 comporte un axe central de basculement 3 disposé horizontalement et parallèlement au pan incliné (voir figure 6).

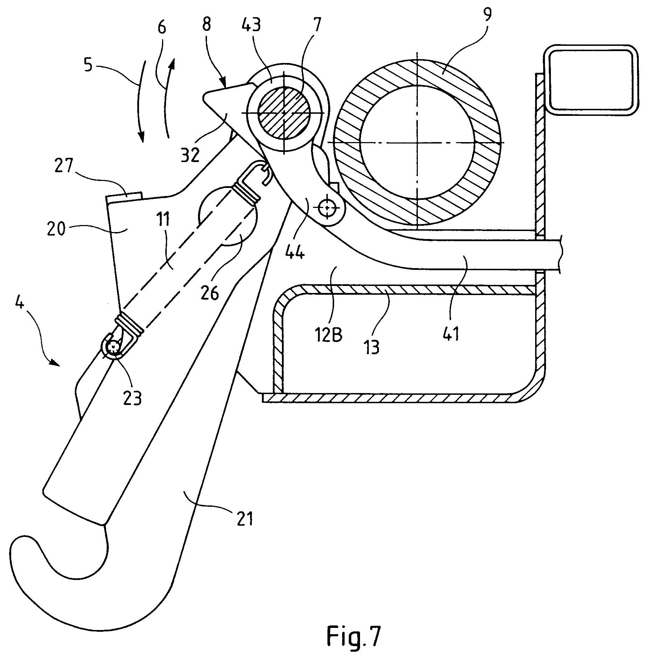

Ce système comporte un crochet central 4 adapté à coopérer avec l'axe 3 ; des moyens de montage du crochet 4 lui permettant de passer d'une position d'accrochage où il est relevé (voir figures 1 à 3) à une position effacée où il est abaissé (voir figure 7) en tournant dans un sens d'abaissement illustré par la flèche 5, et de la position effacée à la position d'accrochage en tournant dans le sens de relevage illustré par la flèche 6 ; ainsi que des moyens pour s'opposer à l'abaissement du crochet 4 quand il est en position d'accrochage.

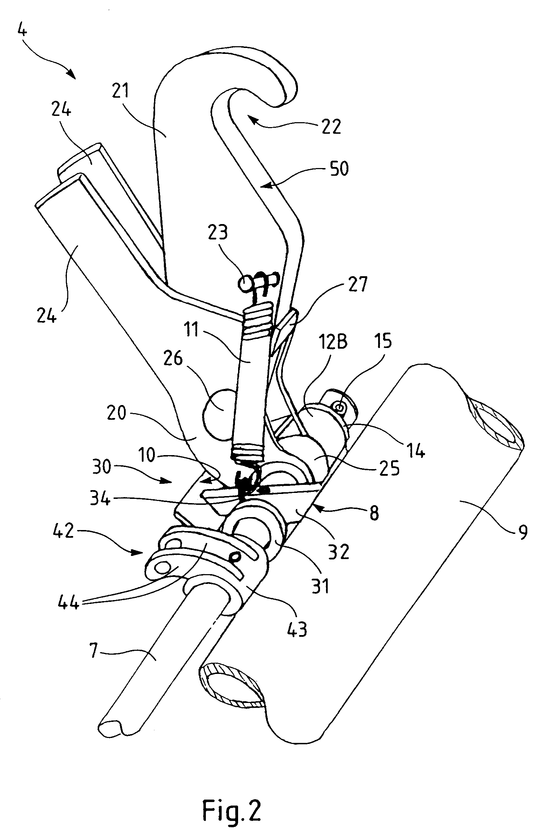

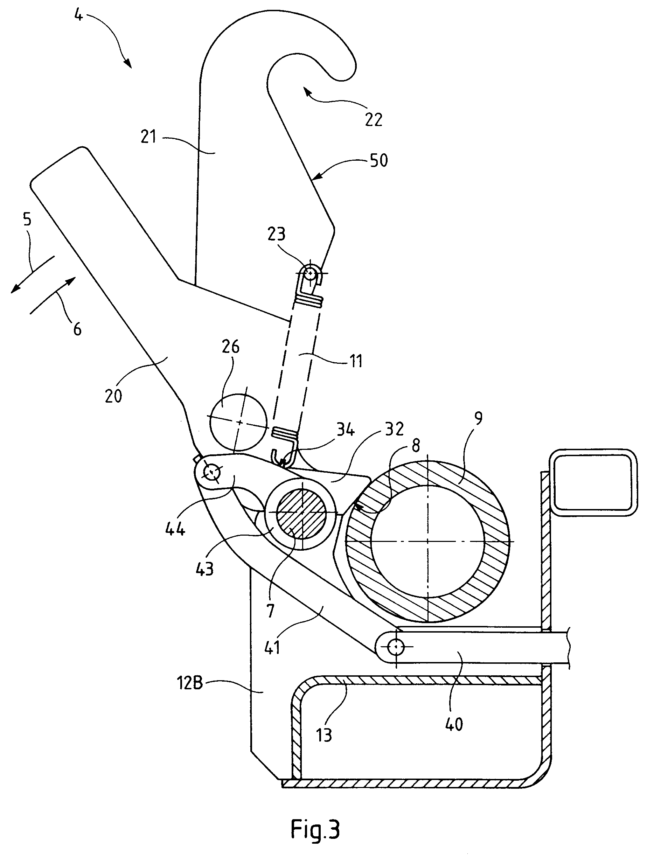

Les moyens de montage du crochet 4 comportent un arbre 7 monté à pivotement sur le dispositif de manutention, le crochet étant lui-même monté à pivotement sur l'abre 7 ; une butée de relevage 8 solidarisée à l'arbre 7 pour arrêter le relevage du crochet quand il est parvenu en position d'accrochage, la butée 8 étant alors en appui sur la poutre arrière transversale ronde 9 du dispositif de manutention (voir figures 2 et 3) ; une deuxième butée 10 solidaire de la butée 8 (et donc de l'arbre 7) et disposée de sorte que le crochet est en position d'accrochage quand il est en appui sur la butée 10 alors que la butée 8 est en appui sur la poutre 9 ; et un ressort de traction 11 connecté à l'arbre 7 à une première extrémité et au crochet 4 à une deuxième extrémité, qui sollicite le crochet 4 vers la butée 10 dans le sens d'abaissement 5 quand le crochet est dans la position d'accrochage (voir figures 2 et 3).

L'arbre 7 est monté à pivotement sur le dispositif de manutention grâce à trois supports verticaux 12A, 12B et 12C soudés sur la poutre arrière basse 13 à section en L du dispositif de manutention, ces supports formant palier pour l'arbre 7, celui-ci étant bloqué axialement grâce à une rondelle 14 disposée à l'extérieur de chaque support externe 12A et 12C, et à une goupille 15 fixée transversalement dans l'arbre 7 et portant sur le coté externe de la rondelle 14.

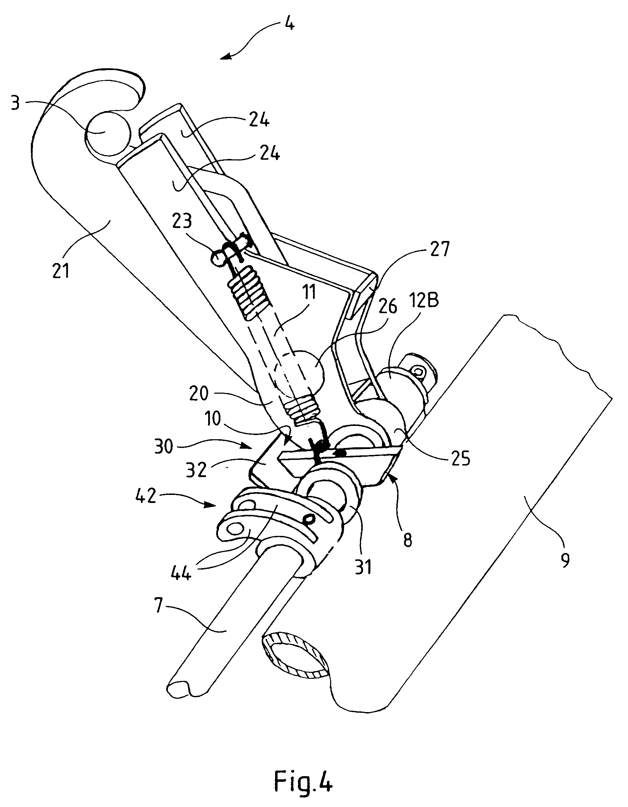

Le crochet 4 comporte un flasque 20 monté à pivotement sur l'abre 7 et une patte 21 à bout recourbé montée à pivotement sur le flasque 20, des moyens de butée étant prévus pour que la patte 21 soit mobile par rapport au flasque 20 entre une première position extrême où le bec 22 formé par le bout recourbé de la patte 21 est dégagé du flasque 20 (voir figures 1 à 3) et une deuxième position extrême où le flasque 20 ferme le bec 22 (voir figure 4).

Le ressort 11 est fixé au crochet 4 par la patte 21, grâce à une tige en saillie 23 soudée transversalement sur la patte 21.

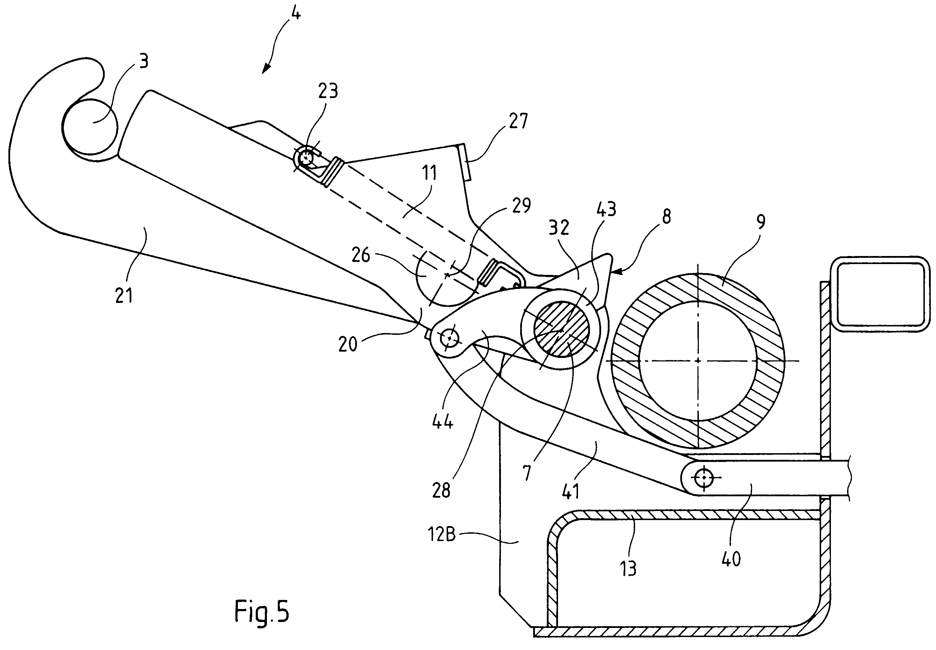

Les différents éléments, et notamment l'arbre 7, la butée 10, le flasque 20, la patte 21 et le ressort 11 sont adaptés à coopérer, lorsque la butée 8 est en appui sur la poutre 9, pour que le crochet adopte spontanément la configuration d'accrochage illustrée sur les figures 1 à 3, où le crochet est dans la première position extrême avec le flasque en appui sur la butée 10 ; pour que si le crochet est sollicité dans le sens de relevage 6, alors le flasque 20 et la patte 21 basculent à l'encontre du ressort 11 dans le sens 6 (voir figure 6) ; et pour que si la patte 21 est sollicitée à partir de la configuration d'accrochage dans le sens d'abaissement 5, alors la patte 21 pivote par rapport au flasque 20 dans le sens 5, jusqu'à la deuxième position extrême (voir figure 4), de sorte que quand le crochet 4 retient une benne en cours de basculement, son bec est fermé par le flasque 20 (voir figure 5).

Le flasque 20 est double et comporte une joue 24 de chaque côté de la patte 21, chaque joue se raccordant à une bague 25 entourant l'arbre 7, la patte 21 étant articulée sur un tourillon 26 fixé sur les joues 24. Un pontet 27 relie les joues 24 et fait partie des moyens de butée propres au crochet, celui-ci étant dans la première position extrême quand la patte 21 est en appui sur le pontet 27. La tige 23 fait également partie des moyens de butée propres au crochet 4, celui-ci étant dans la deuxième position extrême quand la tige 23 est en appui sur une joue 24 (voir figures 4 et 5).

On notera que l'axe 28 de l'arbre 7, qui est également l'axe de pivotement du flasque sur l'arbre 7, que l'axe 29 du tourillon 26, qui est l'axe de pivotement de la patte 21 sur le flasque 20, et que l'axe géométrique de l'axe de basculement 3 sont sensiblement coplanaires dans la deuxième position extrême (voir figures 4 et 5).

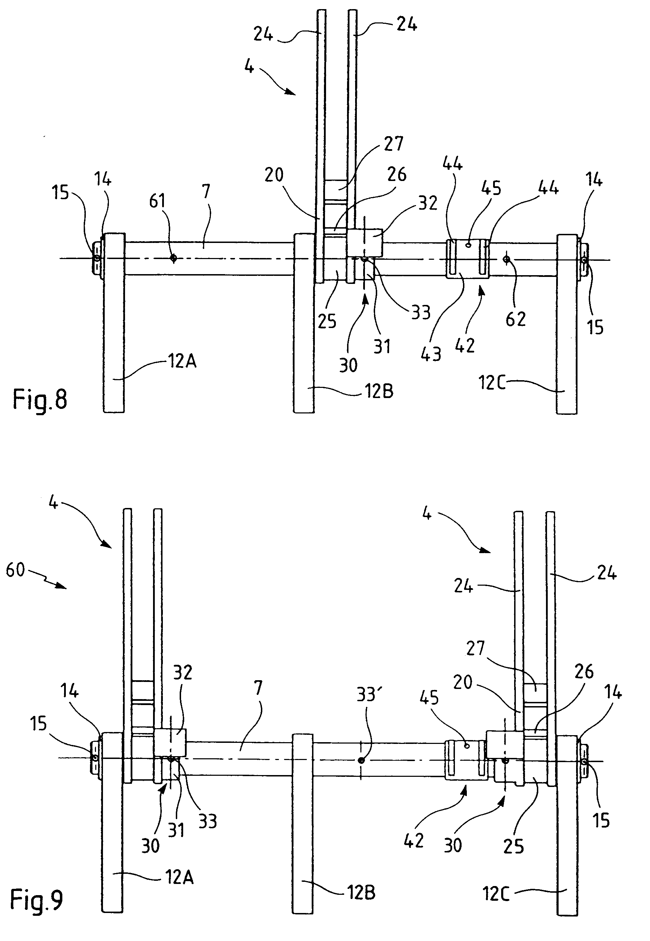

La butée de relevage 8 et la deuxième butée 10 sont réunies sur un élément commun 30 qui comporte une bague 31 entourant l'arbre 7 et un membre 32 en forme de T dont la base correspond à la butée 8 et le dessous d'un des côtés de la branche horizontale à la deuxième butée 10. La solidarisation de l'élément commun 30 à l'arbre 7 est obtenue grâce à une goupille transversale 33 (voir figure 8) qui passe dans un trou approprié 33' de l'arbre 7 (voir figure 9).

Le crochet 4 est bloqué en translation d'un côté par le support 12B et de l'autre côté par l'élément commun 30, et c'est par un petit arceau 34 fixé sur l'élément 30 que le ressort 11 est connecté à l'arbre 7.

Les moyens pour s'opposer à l'abaissement du crochet quand il est en position d'accrochage, comportent un vérin de commande dont la tige 40 est reliée à l'arbre 7 grâce à une biellette 41 articulée sur la tige 40 et sur un levier 42 solidarisé à l'arbre, qui comporte une bague 43 entourant l'arbre 7 et deux joues 44 entre lesquelles s'articule la biellette 41. Le levier 42 est solidarisé à l'arbre 7 grâce à une goupille 45 qui passe dans un trou approprié de l'arbre 7 (voir figure 8).

Lorsque le vérin de commande sort sa tige 40, alors il fait pivoter l'arbre 7 et le crochet 4 dans le sens 6, le relevage s'arrêtant quand la butée 8 vient en appui sur la poutre 9. Le vérin tend alors à garder sa position tige sortie, c'est-à-dire qu'il s'oppose à l'abaissement du crochet.

Pour utiliser le système d'accrochage illustré sur les figures 1 à 8, on part généralement de la position effacée montrée sur la figure 7, où le crochet est abaissé.

On fait alors sortir la tige du vérin de commande, ce qui amène le système à la position d'accrochage montrée sur les figures 1 à 3. Le système est ainsi prêt à intercepter, par le crochet 4, l'axe de basculement 3 de la benne 1 lorsqu'on fera basculer en arrière les bras du dispositif de manutention : l'axe 3 va rencontrer la rampe 50 de la patte 21 et va glisser sur celle-ci jusqu'à venir en appui au fond du bec 22, la patte 21 est alors sollicitée dans le sens d'abaissement 5, ce qui la fait passer à la deuxième position extrême (figure 4) où l'axe 3 est verrouillé dans le crochet 4 grâce au flasque 20 qui ferme le bec 22, le crochet 4 retient alors la benne, celle-ci tire donc fortement sur le crochet en le sollicitant dans le sens d'abaissement 5, le vérin de commande s'oppose élastiquement à cet abaissement, c'est-à-dire sans interdire totalement une certaine rotation du crochet dans ce sens (voir figure 5) : ce vérin est un vérin à air comprimé, dans lequel la tige rentre sous l'effet des sollicitations en comprimant l'air contenu dans la chambre à grande section.

En autorisant cette rotation, on permet que le crochet s'oriente suivant la direction des efforts exercés sur le crochet par la benne, de sorte que le crochet subit essentiellement des efforts de traction. On notera d'ailleurs que le fait d'avoir les axes 28, 29 et l'axe géométrique de l'axe 3 sensiblement coplanaires a pour effet que la tige 23 ne subit pratiquement aucun effort.

Lorsque la benne 1 s'est vidée derrière le véhicule, on fait basculer les bras du dispositif de manutention vers l'avant, et on suit en principe la séquence inverse, c'est-à-dire que le système accompagne la benne jusqu'à être en position d'accrochage (figures 1 à 3), l'axe 3 de la benne 1 se dégageant alors du crochet 4.

La figure 6 montre un cas où l'axe 3 ne s'est pas dégagé, de sorte que la benne a tiré vers l'avant sur le crochet 4, et a fait basculer celui-ci dans le sens du relevage 6 à l'encontre du ressort 11. On notera que le crochet a pu basculer jusqu'à ce que la benne repose sur un support de chargement 51 du dispositif de manutention.

Si l'on dégage alors le crochet de l'axe 3, il reprendra spontanément la position d'accrochage.

Pour ramener le crochet à la position effacée, on agit sur le vérin de commande, dont on fait rentrer la tige 40.

Dans la variante illustrée sur la figure 9, le système d'accrochage 60 est prévu pour coopérer avec des bennes qui ont deux axes de basculement latéraux plutôt qu'un axe central.

Le système 60 est similaire au système illustré sur les figures 1 à 8, mais avec deux crochets latéraux au lieu d'un crochet central. On a gardé les mêmes références numériques, les éléments utilisés étant identiques : le crochet 4 de gauche est bloqué axialement entre le support 12A et l'élément commun 30 goupillé dans le trou 61 (voir figure 8), et le crochet 4 de droite est bloqué axialement entre le support 12C et l'élément commun 30 goupillé dans le trou 62.

A ce propos, on notera l'intérêt du membre en forme de T de l'élément commun 30, qui permet de fournir la deuxième butée 10 à la fois quand il est disposé à droite et quand il est disposé à gauche du crochet 4.

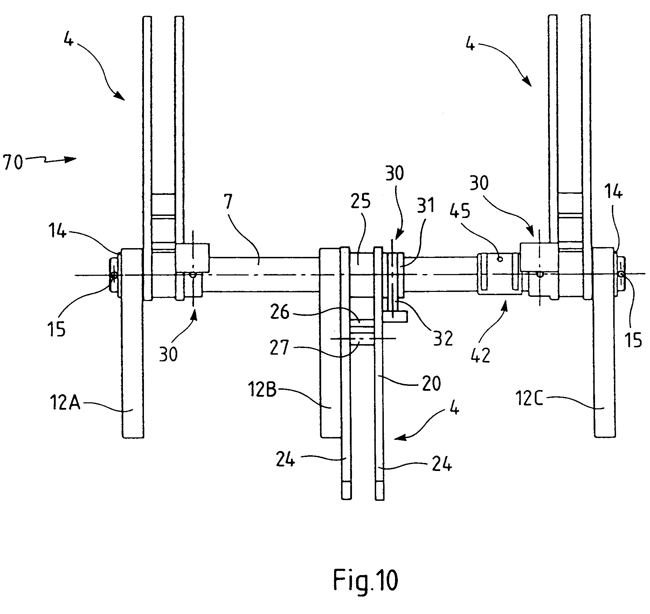

Dans la variante illustrée sur la figure 10, le système d'accrochage 70 est prévu pour coopérer soit avec des bennes qui ont un axe de basculement central, soit avec des bennes qui ont deux axes de basculement latéraux

Le système 70 est similaire au système illustré sur les figures 1 à 8, ou sur la figure 9, mais avec un crochet central monté comme sur les figures 1 à 8 et deux crochets latéraux montés comme sur la figure 9.

Lorsque le système 70 doit être utilisé avec des bennes à deux axes de basculement latéraux, on enlève la goupille 33 qui solidarise l'élément commun 30 associé au crochet central de sorte que ce crochet restera en position effacée quand on fera sortir la tige du vérin de commande (configuration illustrée sur la figure 10).

Lorsque le système doit être utilisé avec des bennes à un axe de basculement central, ce sont les goupilles des éléments communs des crochets externes qu'on enlève.

Dans des variantes simplifiées, destinées à des applications où il n'est pas utile que le crochet verrouille l'axe de basculement de la benne, on remplace le crochet 4 par une patte à bout recourbé articulée directement sur l'arbre 7 et rentrant directement en contact avec la butée 10.

On notera que le système d'accrochage où le ou les crochet(s) est ou sont capable(s) de basculer vers l'avant en position d'accrochage, fait l'objet d'une demande de brevet déposée en même temps que la présente demande.

Dans des variantes encore plus simplifiées de la présente invention, chaque crochet peut être totalement immobilisé avec une goupille vis à vis de l'arbre 7, avec une butée de relevage solidaire du crochet. De préférence, la butée de relevage ne fait pas directement partie du crochet, mais est goupillée sur l'axe indépendamment du crochet : en cas de blocage, on peut prévoir que ce soit l'une des goupilles d'un crochet ou de la butée de relevage qui casse, en utilisant des goupilles adaptées à rompre sous un couple prédéterminé.

## Revendications

1. Système d'accrochage pour dispositif de manutention de bennes trapézoïdales, comportant au moins un crochet (4) adapté à coopérer avec un axe de basculement d'une dite benne (1) et des moyens de montage du crochet (4) comportant un arbre (7) monté à pivotement sur le dispositif de manutention ; caractérisé en ce que ledit arbre (7) est adapté au montage de trois crochets : un crochet central (4) adapté à coopérer avec des bennes du type comportant un axe de basculement central (3), et deux crochets latéraux (4) adaptés à coopérer avec des bennes du type comportant deux axes de basculement latéraux, chaque crochet pouvant être libéré en rotation vis à vis de l'arbre (7).

2. Système selon la revendication 1, caractérisé en ce que chaque crochet est bloqué vis à vis de l'arbre (7) grâce à une goupille démontable (33).

3. Système selon l'une quelconque des revendications 1 ou 2, caractérisé en ce que ledit arbre (7) est monté à pivotement grâce à au moins deux supports verticaux (12A, 12B, 12C) formant palier, en ce qu'il est bloqué axialement grâce à un moyen démontable (15) coopérant avec au moins un dit support, et en ce qu'il comporte un levier de commande (42) bloqué vis à vis de l'arbre (7) grâce à un moyen démontable (45).

4. Système selon la revendication 3,
caractérisé en ce que lesdits moyens démontables sont des goupilles (15, 45).

5. Système selon l'une quelconque des revendications 2 à 4, caractérisé en ce qu'il comporte une butée de relevage (8) bloquée vis à vis dudit arbre (7) grâce à une goupille indépendante d'une goupille de blocage total du crochet par rapport à l'arbre (7).

6. Système selon la revendication 5, caractérisé en ce que chaque goupille de blocage total d'un crochet est adaptée à rompre sous un couple prédéterminé.

7. Système selon l'une quelconque des revendications 5 ou 6, caractérisé en ce que la goupille de fixation de la butée de relevage sur l'arbre est adaptée à rompre sous un couple prédéterminé.

## Claims

1. Attachment system for a device for handling trapezoidal grabs, including at least one hook (4) adapted to cooperate with a pivot shaft on a said grab (1) and means for mounting the hook (4) including a spindle (7) pivotally mounted on the handling device; characterised in that the said spindle (7) is adapted to the mounting of three hooks: a central hook (4) adapted to cooperate with grabs of the type having a central pivot shaft (3), and two lateral hooks (4) adapted to cooperate with grabs of the type having two lateral pivot shafts, each hook being able to be released with respect to rotation vis-a-vis the spindle (7).

2. System according to Claim 1, characterised in that each hook is locked with respect to the spindle (7) by means of a removable pin (33).

3. System according to either one of Claims 1 or 2, characterised in that the said spindle (7) is pivotally mounted by means of at least two vertical supports (12A, 12B, 12C) forming a bearing, in that it is axially locked by means of a removable means (15) cooperating with at least one said support, and in that it has a control lever (42) locked with respect to the spindle (7) by means of a removable means (45).

4. System according to Claim 3, characterised in that said removable means are pins (15, 45).

5. System according to any one of Claims 2 to 4, characterised in that it includes a raising stop (8) locked with respect to the said spindle (7) by means of a pin which is independent of a pin for the total locking of the hook with respect to the spindle (7).

6. System according to Claim 5, characterised in that each pin for the total locking of a hook is adapted to rupture under a predetermined torque.

7. System according to either one of Claims 5 or 6, characterised in that the pin for fixing the raising stop on the spindle is adapted to rupture under a predetermined torque.

## Patentansprüche

1. Einhaksystem für eine Vorrichtung zum Handhaben trapezförmiger Behälter mit wenigstens einem mit einer Schwenkachse des Behälters (1) zusammenwirkenden Haken (4) und Tragmitteln des Hakens (4), die eine drehbar an der Handhabungsvorrichtung gelagerte Welle (7) aufweisen, **dadurch gekennzeichnet**, daß die Welle (7) zur Lagerung von drei Haken vorgesehen ist: einem mittleren Haken (4), der zum Zusammenwirken mit Behältern mit einer mittleren Schwenkachse (3) geeignet ist, und zwei seitlichen Haken (4), die zum Zusammenwirken mit Behältern mit zwei seitlichen Schwenkachsen geeignet sind, wobei jeder Haken gegenüber der Welle (7) in Drehrichtung freizugeben ist.

2. System nach Anspruch 1, **dadurch gekennzeichnet**, daß jeder Haken gegenüber der Welle (7) mittels eines abnehmbaren Stifts (33) festlegbar ist.

3. System nach Anspruch 1 oder 2, **dadurch gekennzeichnet**, daß die Welle (7) mit Hilfe von wenigstens zwei senkrechten Stützen (12A, 12B, 12c), welche Lager bilden, drehbar gelagert ist, daß sie durch ein demontierbares Mittel (15), welches mit wenigstens einer der Stützen zusammenwirkt, axial festgelegt ist, und daß sie einen Steuerhebel (42) trägt, der durch ein demontierbares Mittel (45) gegenüber der Welle (7) festgelegt ist.

4. System nach Anspruch 3, **dadurch gekennzeichnet**, daß die demontierbaren Mittel Stifte (15, 45) sind.

5. System nach einem der Ansprüche 2 bis 4, **dadurch gekennzeichnet**, daß es einen Aufstellanschlag (8) aufweist, der gegenüber der Welle (7) mittels eines Stifts festlegbar ist, welcher unabhängig ist von einem Stift zur vollständigen Festlegung des Hakens mit Bezug auf die Welle (7).

6. System nach Anspruch 5, **dadurch gekennzeichnet**, daß jeder Stift zur vollständigen Festlegung eines Hakens so ausgelegt ist, daß er bei einem bestimmten Drehmoment bricht.

7. System nach einem der Ansprüche 5 oder 6, **dadurch gekennzeichnet**, daß der Stift zur Festlegung des Aufstellanschlags an der Welle so ausgelegt ist, daß er bei einem bestimmten Drehmoment bricht.
